# EUROPÄISCHE PATENTSCHRIFT

(11) **EP 2 647 942 B1**
(45) Veröffentlichungstag und Bekanntmachung des Hinweises auf die Patenterteilung: **01.10.2014**
(21) Anmeldenummer: 12163275.6
(22) Anmeldetag: 05.04.2012
(51) Int. Cl.: F28F 3/12, B22F 3/105, B29C 67/00

(54) **Mikrofluidik-Bauteil und Verfahren zu seiner Herstellung**
Microfluidic component and procedure for its manufacture
Composant microfluidique et son procédé de fabrication

(43) Veröffentlichungstag der Anmeldung: 09.10.2013
(73) Patentinhaber: Institut Für Luft- Und Kältetechnik Gemeinnützige GmbH, 01309 Dresden (DE)
(72) Erfinder: Hempel, Olaf, Dr., 01309 Dresden (DE); Stangl, Robert, 01277 Dresden (DE); Ebert, Robby, 09114 Chemnitz (DE); Ullmann, Frank, 09112 Chemnitz (DE)
(74) Vertreter: Kaufmann, Sigfrid

(56) Entgegenhaltungen:
- WO-A1-2006/064202
- DE-C1- 10 033 908
- US-A1- 2008 105 413

## Beschreibung

Die Erfindung betrifft ein Mikrofluidik-Bauteil mit Kanälen zum Hindurchführen mehrerer Fluide, z.B. zur Verwendung als Mikrowärmeübertrager oder Mikromischer.

DE 100 33908 C1 beschreibt ein Bauteil mit den Merkmalen des Oberbegriffes des Patentanspruch 1.

Die Mikrofluidik befasst sich mit dem Verhalten von Flüssigkeiten und Gasen auf engem Raum (im Submillimeterbereich) und unter Berücksichtigung kleiner Fluidvolumina, sowie mit der entsprechenden technischen Anwendung mittels Mikrofluidik-Bauteilen, wie z.B. Mikrowärmeübertragern und Mikromischern. Dabei wird z.B. ausgenutzt, dass sich das Strömungs- und das Mischungsverhalten von Fluiden bei kleinen Abmessungen wesentlich von dem Verhalten makroskopischer Fluide unterscheiden kann. Mikrowärmeübertrager und Mikromischer können z.B. mittels mehrerer Mikrokanäle realisiert werden und z.B. unter Verwendung von Mikrostrukturtechnologien hergestellt werden. Unter einem Mikrowärmeübertrager wird eine Vorrichtung zum Übertragen von Wärme zwischen einem ersten Fluid und einem zweiten Fluid oder weiteren Fluiden verstanden, wobei der Wärmeübergang z. B. realisiert werden kann, indem die (beiden) Fluide durch nebeneinander angeordnete, miteinander in thermischem Kontakt stehende Mikrokanäle hindurchgeleitet werden. Unter einem Mikromischer wird eine Vorrichtung zum Vermischen zweier oder mehrerer Fluide verstanden, wobei die Vermischung z.B. nach dem Multilaminationsprinzip realisiert werden kann, indem z.B. zwei Masseströme auf Mikrokanäle aufgeteilt und in einen Mischraum geführt werden.

Herkömmliche Mikrowärmeübertrager bzw. Mikrowärmetauscher werden z.B. hergestellt, indem mittels Materialabtrags (z.B. durch Fräsen oder Ätzen) Mikrokanäle in Metallfolien bzw. Metallplatten eingebracht werden, danach die einzelnen Folien bzw. Platten gestapelt und mittels Lötens oder Schweißens miteinander zu einem Wärmeübertragerblock verbunden werden. Die als Gehäuse bzw. als äußere Hülle dienenden Teile des Wärmeübertragers werden als massive Metallteile mit Wandstärken von mehreren Millimetern ausgeführt, um zum einen der Druckdifferenz zwischen dem Fluiddruck im Inneren des Wärmeübertragers und dem Atmosphären- bzw. Umgebungsdruck außerhalb des Wärmeübertragers standzuhalten und zum anderen ein Anbringen der Zu- und Ableitungen für die Wärmeträgermedien zu ermöglichen. Die zur Fluidzuführung bzw. Fluidabführung dienenden Anschlussleitungen werden z.B. mittels Schweißens an dem Wärmeübertrager bzw. an dessen Hüllgehäuse befestigt. Die massiven Gehäuseteile gehen mit einem entsprechend hohen Gewicht und Materialaufwand einher; zudem sind die Wandstärken, Abmessungen und Geometrien der einzelnen Mikrokanäle bei den herkömmlichen Herstellungsverfahren nur sehr eingeschränkt variierbar.

Als Beispiel für ein Mikrofluidik-Bauteil beschreibt die DE 100 33 908 C1 einen MikroWärmeübertrager mit in abwechselnden Ebenen angeordneten und sich senkrecht kreuzenden, Wärmeträgermedien führenden und voneinander getrennten Kanälen. Die DE 103 57 082 B3 beschreibt einen Spiralmikrowärmetauscher mit spiralförmiger oder wendelförmiger Fluidführung für die Wärmeübertragung zwischen zwei Fluidfraktionen.

Aufgabe der Erfindung ist es, ein stabiles, gewichtsoptimiertes Mikrofluidik-Bauteil (z.B. zur Verwendung als Mikrowärmeübertrager oder Mikromischer) bereitzustellen, welches zudem einen effektiven Wärmeübertrag oder ein effektives Fluidmischen ermöglicht. Des Weiteren soll ein Verfahren bereitgestellt werden, mittels dessen ein kostengünstiges Herstellen eines Mikrofluidik-Bauteils mit beliebigen Fluidführungsgeometrien bei geringem Materialaufwand ermöglicht wird.

Gemäß einem Aspekt der Erfindung wird ein Mikrofluidik-Bauteil mit einer Fluidführungsstruktur mit ersten Kanälen zum Hindurchführen eines ersten Fluids und zweiten Kanälen zum Hindurchführen eines zweiten Fluids bereitgestellt, wobei die Fluidführungsstruktur vollständig oder zumindest teilweise (z. B. bis auf Durchführungen für Anschlüsse zum Zu- und Abführen der Fluide) von einer Hüllstruktur in Form einer Doppelwandstruktur umgeben ist. Die Doppelwandstruktur weist eine Innenwand und eine im Abstand zu der Innenwand angeordnete Außenwand auf. Es ist jeweils eine Vielzahl von ersten Kanälen und eine Vielzahl von zweiten Kanälen vorgesehen, wobei einige oder alle der Kanäle als Mikrokanäle ausgebildet sind (d.h. als Kanäle, bei denen zumindest eine Querschnittsabmessung kleiner als 1 mm ist). Die Fluidführungsstruktur und die Doppelwandstruktur sind als einstückiges Bauteil integral miteinander ausgebildet (d.h. liegen in einem einzigen Bauteil integriert vor), wobei dieses Bauteil z.B. bevorzugt ein monolithisches Bauteil (d.h. ein einstückiges Bauteil ohne räumliche Materialvariationen, z.B. ohne zusätzliche Füge- bzw. Verbindungsmaterialien wie etwa Klebmaterialien, Schweißmaterialien oder Lötmaterialien) ist. Solch ein monolithisches Bauteil weist insbesondere räumlich homogene Wärmeübertragungseigenschaften auf. Die Kanäle können z. B. derart angeordnet sein, dass abwechselnd jeweils eine Reihe erster Kanäle und eine Reihe zweiter Kanäle in übereinanderliegenden (bzw. einander gegenüberliegenden), zueinander parallelen Ebenen verlaufen. Das erste und das zweite Fluid können gasförmig oder flüssig vorliegen, die Fluide können jedoch auch in Form einer Zweiphasenströmung vorliegen, wobei die Fluide z.B. (innerhalb des Mikrofluidik-Bauteils) verdampfen oder kondensieren.

Das Mikrofluidik-Bauteil kann z.B. ein Mikrowärmeübertrager sein, wobei die Fluide als Wärmeträgermedien fungieren, die ersten Kanäle zum Hindurchleiten des ersten Wärmeträgermediums und die zweiten Kanäle zum Hindurchleiten des zweiten Wärmeträgermediums vorgesehen sind, und die ersten Kanäle im thermischen Kontakt mit den zweiten Kanälen angeordnet sind, sodass ein Wärmeaustausch zwischen dem ersten und dem zweiten Wärmeträgermedium ermöglicht ist. Die Stromführung der Wärmeträgermedien kann durch eine entsprechende Anordnung der ersten und der zweiten Kanäle z.B. im Gegenstrom oder im Gleichstrom (wobei die ersten Kanäle parallel zu den zweiten Kanälen verlaufen), im Kreuzstrom (wobei die ersten Kanäle senkrecht zu den zweiten Kanälen verlaufen) oder auch in Mischformen davon, z.B. im Kreuzgegenstrom, erfolgen; wobei die ersten Kanäle und die zweiten Kanäle z.B. alternierend in (entlang der Ebenennormale) benachbarten, zueinander parallelen Ebenen angeordnet sein können. Das erste und das zweite Wärmeträgermedium können aus denselben oder aus unterschiedlichen Stoffen bestehen, sind jedoch voneinander getrennte Fluide.

Das Mikrofluidik-Bauteil kann auch ein Mikromischer zum Vermengen bzw. Vermischen zweier (unterschiedlicher) Fluide bzw. Fluidfraktionen sein, wobei das Vermischen durch Verteilen der beiden Fluid-Massenströme auf die ersten und die zweiten Kanäle und Einleiten der resultierenden Teilströme in einen Mischraum bzw. ein Mischvolumen erfolgt.

Es kann auch vorgesehen sein, die Fluidführungsstruktur neben den ersten und den zweiten Kanälen mit weiteren Kanälen zum Hindurchleiten weiterer Fluide auszubilden. Zum Beispiel kann vorgesehen sein, die Fluidführungsstruktur zusätzlich mit dritten Kanälen zum Hindurchführen eines dritten Fluids auszubilden, sodass z.B. ein Wärmeaustausch zwischen drei Fluiden oder ein Vermischen dreier Fluide ermöglicht ist.

Das Mikrofluidik-Bauteil bzw. die Fluidführungsstruktur kann z.B. mit einer quaderförmigen oder einer kreiszylindrischen Gestalt bzw. Außenkontur ausgebildet sein, wobei die ersten und die zweiten Kanäle z.B. einen rechteckigen oder auch einen kreisförmigen Querschnitt aufweisen können, aber auch mit anderen Querschnittsformen ausgebildet sein können. Die Kanäle können z.B. als Mikrokanäle mit einem kreisförmigen Querschnitt mit einem Durchmesser von unter 1 mm oder als Mikrokanäle mit einem rechteckigen Querschnitt mit Rechteck-Seitenlängen von unter 1 mm ausgebildet sein.

Indem die Fluidführungsstruktur von der Hüllstruktur bzw. Einhüllung in Form der Doppelwandstruktur umhüllt ist, kann eine stabile, fluiddichte und druckfeste Einhausung der Fluidführungsstruktur bei geringem Gewicht ermöglicht werden; wobei die Doppelwandstruktur mit den zwei voneinander beabstandeten Wänden eine größere mechanische Stabilität ermöglichen kann als eine Einfachwand mit entsprechender Materialdicke. Mittels der integralen Ausbildung der Fluidführungsstruktur und der Doppelwandstruktur kann die mechanische Stabilität des Mikrofluidik-Bauteils zusätzlich erhöht werden, zudem können beide Strukturen z.B. zeitsparend mittels eines einzigen Herstellungsvorgangs formgenau hergestellt werden. Mittels einer räumlich homogenen Materialzusammensetzung können zudem Spannungen, die z.B. aus unterschiedlichen Wärmeausdehungskoeffizienten unterschiedlicher Materialzusammensetzungen resultieren, vermieden werden.

Der Zwischenraum zwischen der Innen- und der Außenwand der Doppelwandstruktur steht nicht in Fluidverbindung mit dem ersten oder dem zweiten Fluid oder einem anderen der die Fluidführungsstruktur durchströmenden Fluide (bzw. mit den zugehörigen Kanälen) bzw. wird nicht von diesen Fluiden durchströmt oder befüllt. Dadurch ist sichergestellt, dass die aus der Druckdifferenz zwischen dem Fluiddruck innerhalb der Fluidführungsstruktur und dem Atmosphären- bzw. Umgebungsdruck außerhalb der Fluidführungsstruktur resultierenden Kräfte von der stabilen Doppelwandstruktur aufgenommen werden können.

Die Innenwand und die Außenwand der Doppelwandstruktur bzw. Doppelwand können jeweils mit einer geringen Wandstärke ausgeführt sein. Die Doppelwandstruktur kann zum Erhöhen der Stabilität derselben Verstärkungselemente aufweisen, die von der Innenwand zu der Außenwand verlaufend zwischen diesen Wänden angeordnet sind und als Abstandhalter bzw. Verstärkungen zwischen der Innenwand und der Außenwand fungieren. Zum Beispiel kann vorgesehen sein, die Doppelwandstruktur mit einer Tragstruktur bzw. einem Tragwerk aus Verstärkungselementen in Form von Verstärkungsstegen und/oder Verstärkungswänden, die (z.B. in Form eines Fachwerks) zwischen der Innenwand und der Außenwand verlaufen, auszubilden.

Alternativ oder zusätzlich dazu kann zum Erhöhen der mechanischen Stabilität der Doppelwandstruktur vorgesehen sein, in dem Raum zwischen der Innenwand und der Außenwand eine poröse (z.B. offenporige oder geschlossenporige) Versteifungsstruktur auszubilden, z.B. in Form einer wabenartigen oder schaumartigen Hohlzellenstruktur. Solch eine poröse Versteifungsstruktur kann zur Erhöhung der Festigkeit der Doppelwandstruktur beitragen, wobei jedoch Spannungen und Risse, wie sie z.B. oftmals bei massiv gesinterten Körpern auftreten können, vermieden werden.

Gemäß einer Ausführungsform bestehen die Fluidführungsstruktur und die Doppelwandstruktur aus Metall (d.h. einem metallischen Werkstoff, z.B. einer Metalllegierung). Metallische Werkstoffe können z.B. aufgrund ihrer Wärmeleiteigenschaften ein effektives Übertragen von Wärme zwischen dem ersten und dem zweiten Fluid (bzw. allgemein zwischen den die Fluidführungsstruktur durchströmenden Fluiden) ermöglichen und aufgrund ihrer mechanischen Eigenschaften das Ausbilden eines fluiddichten und druckfesten Mikrofluidik-Bauteils gewährleisten. Die Fluidführungsstruktur und die Doppelwandstruktur (sowie weitere Teile - wie z.B.Sammler und Verteiler des Mikrofluidik-Bauteils) können z.B. aus Chromnickelstahl, Kupfer oder Aluminium bestehen. Es kann jedoch auch vorgesehen sein, dass die Fluidführungsstruktur und/oder die Doppelwandstruktur aus einem Kunststoff oder einer Keramik bestehen.

Gemäß einer weiteren Ausführungsform weist das Mikrofluidik-Bauteil einen ersten Verteiler zum Verteilen des ersten Fluids auf die ersten Kanäle, einen zweiten Verteiler zum Verteilen des zweiten Fluids auf die zweiten Kanäle, einen ersten Sammler zum Sammeln des aus den ersten Kanälen ausströmenden ersten Fluids und einen zweiten Sammler zum Sammeln des aus den zweiten Kanälen ausströmenden zweiten Fluids auf, wobei der erste Verteiler, der zweite Verteiler, der erste Sammler und der zweite Sammler z.B. als einstückiges bzw. monolithisches Bauteil integral mit der Fluidführungsstruktur ausgebildet sein können. Insbesondere kann vorgesehen sein, die beiden Sammler, die beiden Verteiler, die Fluidführungsstruktur und zusätzlich die Doppelwandstruktur integral miteinander als einstückiges bzw. monolithisches Bauteil auszubilden. Die Verteiler dienen zum Zuführen bzw. Einleiten des jeweiligen Fluids in die zugehörigen Kanäle, die Sammler dienen zum Abführen bzw. Ableiten des jeweiligen Fluids aus den jeweiligen Kanälen.

Bei Ausbildung der Fluidführungsstruktur mit weiteren Kanälen (z.B. mit dritten Kanälen zum Hindurchführen eines dritten Fluids) können entsprechend zugehörige weitere Verteiler und Sammler vorgesehen sein, welche auf dieselbe Art und Weise an die Fluidführungsstruktur angebunden sein können wie der erste und der zweite Verteiler bzw. der erste und der zweite Sammler, und welche z.B. ebenfalls als einstückiges bzw. monolithisches Bauteil integral mit der Fluidführungsstruktur ausgebildet sein können.

Die Verteiler (auch als Fluidverteiler bezeichnet) und Sammler (auch als Fluidsammler bezeichnet) können aus demselben Material bestehen wie die Fluidführungsstruktur und/oder die Doppelwandstruktur. An die Verteiler und Sammler können z.B. Anschlussrohre zum gesammelten Zu- bzw. Abführen der Fluide angebunden (z.B. angeschweißt) sein.

Es kann vorgesehen sein, dass die Wandstärke der fluidführenden (ersten und zweiten) Kanäle innerhalb der Fluidführungsstruktur geringer ist als die Wandstärke der Innenwand und/oder der Außenwand der Doppelwandstruktur. Da die Druckdifferenz zwischen den beiden Fluiddrücken wesentlich geringer sein kann als die Druckdifferenz zwischen einem der Fluiddrücke und dem außerhalb des Mikrofluidik-Bauteils vorherrschenden Atmosphärendruck, kann die Stabilität der Kanalwände unter entsprechender Materialeinsparung geringer gehalten sein als die Stabilität der Hüllstruktur.

Die ersten Kanäle und die zweiten Kanäle (sowie etwaig vorhandene weitere Kanäle) weisen bevorzugt eine Wandstärke im Bereich von 25 µm bis 200 µm auf. Es wurde gefunden, dass derartige Wandstärken zum Gewährleisten einer fluiddichten Trennung der beiden Fluide genügen. Indem die Wandstärke der Kanalwände derart gering gehalten wird, wird die Wärmelängsleitung zwischen der Ein- und der Austrittsseite der Fluide entlang der Kanalwände unterdrückt und gering gehalten, wodurch der Wirkungsgrad des Wärmeübertragers wesentlich erhöht wird.

Die Gesamt-Wandstärke der Doppelwand (d.h. die Summe der Wandstärken der Innenwand und der Außenwand sowie des Abstands zwischen denselben) beträgt bevorzugt maximal 1000 µm; die Wandstärke der Innenwand und die Wandstärke der Außenwand liegen bevorzugt im Bereich von 50 µm bis 300 µm. Die ersten und die zweiten Kanäle sind bevorzugt als rechteckige Kanäle ausgeführt, wobei jeder der Kanäle einen rechteckigen Querschnitt mit Rechteckseitenlängen im Bereich von 25 µm bis 300 µm aufweist.

Gemäß einem weiteren Aspekt der Erfindung wird ein Verfahren zum Herstellen eines Mikrofluidik-Bauteils gemäß einer der vorstehend erläuterten Ausgestaltungen bereitgestellt, aufweisend den Schritt des (selektiven) Lasersinterns einer Fluidführungsstruktur mit ersten Kanälen zum Hindurchführen eines ersten Fluids und zweiten Kanälen zum Hindurchführen eines zweiten Fluids sowie den Schritt des (selektiven) Lasersinterns einer die Fluidführungsstruktur zumindest teilweise umgebenden Hüllstruktur bzw. Einhüllung in Form einer Doppelwandstruktur, wobei die Doppelwandstruktur eine Innenwand und eine im Abstand zu der Innenwand angeordnete Außenwand aufweist, und wobei die Fluidführungsstruktur und die Doppelwandstruktur mittels des Lasersinterns als einstückiges (z.B. monolithisches) Bauteil integral miteinander ausgebildet bzw. gesintert werden.

Beim selektiven Lasersintern werden räumliche Strukturen durch ortsselektives Sintern mittels Laserlichts aus einem pulverförmigen Ausgangsmaterial hergestellt, wobei die herzustellende Struktur Schicht für Schicht aufgebaut wird. Mittels selektiven Lasersinterns kann das Mikrofluidik-Bauteil mit (beliebigen) dreidimensionalen Geometrien und mit Abmessungen hergestellt werden, die mittels anderer Verfahren nicht realisierbar sind. Zudem ermöglicht das Lasersintern das Herstellen kleiner Strukturen (insbesondere das Herstellen kleiner Strukturen mit Abmessungen im µm-Bereich innerhalb eines einstückigen Werkstücks) und somit ein Herstellen des Mikrofluidik-Bauteils mit geringem Materialaufwand. Die Fluidführungsstruktur und die Doppelwandstruktur können mittels des Lasersinterns z.B. monolithisch mit einer homogenen Materialzusammensetzung und ohne zusätzliche Fügematerialien hergestellt werden.

Mittels des Verfahrens kann ein Mikrofluidik-Bauteil (z.B. ein Mikrowärmeübertrager oder ein Mikromischer) gemäß den vorstehend bereits erläuterten Ausgestaltungen hergestellt werden, sodass im Folgenden lediglich knapp auf einige der entsprechenden Verfahrensschritte eingegangen wird und im Übrigen hiermit auf die Erläuterungen hinsichtlich der Vorrichtung in Form des Mikrofluidik-Bauteils verwiesen wird.

Es kann z.B. vorgesehen sein, die Doppelwandstruktur mit von der Innenwand zu der Außenwand verlaufenden Verstärkungselementen und/oder mit einer zwischen der Innenwand und der Außenwand angeordneten, porösen Versteifungsstruktur auszubilden bzw. zu sintern. Indem ausschließlich einzelne Verstärkungselemente und/oder poröse Versteifungsstrukturen - und nicht das gesamte zwischen der Innenwand und der Außenwand gebildete Hohlraumvolumen - gesintert werden, können der Materialaufwand und die Fertigungszeit gering gehalten werden.

Das Verfahren kann ferner den Schritt des Lasersinterns eines ersten Verteilers zum Verteilen des ersten Fluids auf die ersten Kanäle, eines zweiten Verteilers zum Verteilen des zweiten Fluids auf die zweiten Kanäle, eines ersten Sammlers zum Sammeln des aus den ersten Kanälen ausströmenden ersten Fluids und eines zweiten Sammlers zum Sammeln des aus den zweiten Kanälen ausströmenden zweiten Fluids aufweisen, wobei der erste Verteiler, der zweite Verteiler, der erste Sammler und der zweite Sammler als einstückiges (z.B. monolithisches) Bauteil integral mit der Fluidführungsstruktur ausgebildet bzw. gesintert werden können. Insbesondere kann vorgesehen sein, die beiden Sammler, die beiden Verteiler, die Fluidführungsstruktur und zusätzlich die Doppelwandstruktur integral miteinander als einstückiges (z.B. monolithisches) Bauteil auszubilden bzw. zu sintern.

Es kann jedoch auch vorgesehen sein, die Fluidsammler und Fluidverteiler zunächst als separate Bauteile auszubilden und mittels eines Fügeverfahrens - z.B. mittels Schweißens (insbesondere Laserschweißens), Lötens oder Klebens - an die Fluidführungsstruktur anzubinden.

Wie bereits erläutert, ist die Fluidführungsstruktur nicht auf die Ausbildung mit den ersten Kanälen und den zweiten Kanälen beschränkt, mittels des Schritts des Lasersinterns der Fluidführungsstruktur kann dieselbe vielmehr zusätzlich mit weiteren Kanälen ausgebildet bzw. gesintert werden, wobei entsprechend zugehörige Verteiler und Sammler ebenfalls mittels Lasersinterns hergestellt und/oder an die Fluidflührungsstruktur angebunden werden können. Insbesondere bei solch komplexen Geometrien (mit mehr als zwei Arten von Kanälen) ist die Herstellung mittels Lasersinterns aufgrund der dadurch ermöglichten beliebigen Bauteilgeometrie von Vorteil.

Gemäß einer Ausführungsform ist vorgesehen, die Fluidführungsstruktur und/oder die Doppelwandstruktur und/oder die Verteiler sowie Sammler aus einem metallischen Pulver zu sintern, wobei das Lasersintern z.B. ohne Zusatz eines Binders unter selektivem Aufschmelzen des Metallpulvers mittels Laserlichts realisiert werden kann. Es kann jedoch auch vorgesehen sein, die Fluidführungsstruktur, die Doppelwandstruktur, die Verteiler und/oder die Sammler aus einem Kunststoffpulver oder einem Keramikpulver zu sintern.

Beim selektiven Lasersintern wird das herzustellende Werkstück Schicht für Schicht entlang einer Aufbaurichtung bzw. Schichtbaurichtung aufgebaut. Gemäß einer Ausführungsform des Verfahrens wird das Mikofluidik-Bauteil derart gesintert, dass die Aufbaurichtung beim Lasersintern parallel zu der Längsrichtung der ersten und/oder der zweiten Kanäle ist. Indem die Schichtbaurichtung parallel zur Längsrichtung der jeweiligen Kanäle ist, können die Wandstärke und die Oberflächenrauigkeit dieser Kanäle durch eine entsprechende optische Formung und räumliche Führung des auftreffenden Laserlichts präzise eingestellt werden (und hängen z.B. nicht von dem Absorptionsverhalten des Laserlichts in dem pulverförmigen Ausgangsmaterial ab). Wenn die Schichtbaurichtung beim Lasersintern - wie in der Regel der Fall - vertikal bzw. lotrecht verläuft (indem jeweils eine Schicht pulverförmigen, ungesinterten Ausgangsmaterials auf eine zuvor selektiv gesinterte Schicht aufgebracht und dann ebenfalls selektiv gesintert wird), werden die jeweiligen Kanäle dementsprechend derart gesintert, dass ihre Längsrichtung beim Sintern vertikal verläuft.

Es kann z.B. vorgesehen sein, das Mikrofluidik-Bauteil derart auszubilden, dass alle der ersten Kanäle und der zweiten Kanäle (bzw. alle Kanäle der Fluidführungsstruktur) zueinander parallel (und geradlinig) entlang einer gemeinsamen Längsrichtung verlaufen, wobei das fertige Mikrofluidik-Bauteil z.B. als Mikrowärmeübertrager im Gegenstromverfahren fungieren kann. Das Mikrofluidik-Bauteil kann bei einer solchen Kanalgeometrie z.B. derart gesintert werden, dass die Aufbaurichtung beim Lasersintern parallel zu der (gemeinsamen) Längsrichtung der ersten und zweiten Kanäle (bzw. aller Kanäle der Fluidführungsstruktur) ist. Wenn die Schichtbaurichtung beim Lasersintern vertikal verläuft, werden die Kanäle dementsprechend derart gesintert, dass ihre Längsrichtung beim Sintern vertikal verläuft.

Nach Abschluss des Lasersinterns kann das verbliebene pulverförmige, ungesinterte Ausgangsmaterial, z.B. mittels eines Ultraschallverfahrens, aus den gesinterten Strukturen, insbesondere aus den gesinterten Kanälen, entfernt werden. Es kann auch vorgesehen sein, den ungesinterten Anteil des pulverförmigen Ausgangsmaterials im Bereich zwischen der Innenwand und der Außenwand der Doppelwandstruktur zu belassen.

Mittels des Lasersinterns kann das Mikrofluidik-Bauteil mit geringen Wandstärken der Kanalwände sowie der Innenwand, der Außenwand und der Verstärkungsstrukturen der Doppelwandstruktur - und entsprechend geringem Gewicht und hoher Leistungsdichte - hergestellt werden. Es wurde festgestellt, dass bei den erläuterten Geometrien Wandstärken von maximal 500 µm zum Gewährleisten eines fluiddichten und druckfesten Mikrofluidik-Bauteils genügen, wobei insbesondere für die Kanalwände Wandstärken von 25 µm bis 200 µm hinreichend sind, und dass größere Wandstärken der gesinterten Strukturen von mehr als 500 µm die Fluiddichtheit eher verschlechtern (als Erklärung kommt z.B. Rissbildung in gesinterten Wänden mit Wandstärken von mehr als 500 µm in Betracht). Demgemäß betragen die Wandstärken der gesinterten Wandstrukturen (z. B. der Kanalwände, der Innen- und der Außenwand der Fluidführungsstruktur) des Mikrofluidik-Bauteils bevorzugt maximal 500 µm.

Die Erfindung wird nachfolgend anhand von Ausführungsbeispielen mit Bezug auf die beiliegenden Figuren veranschaulicht, wobei gleiche oder ähnliche Merkmale mit gleichen Bezugszeichen versehen sind; hierbei zeigen schematisch:
- Figur 1A: eine Querschnittsdarstellung eines Mikrofluidik-Bauteils gemäß einer Ausführungsform der Erfindung in Form eines Mikrowärmeübertragers,
- Figur 1B: eine Detailansicht des in Figur 1A gekennzeichneten Darstellungsabschnitts,
- Figur 2A: eine Querschnittsdarstellung eines Mikrofluidik-Bauteils gemäß einer weiteren Ausführungsform der Erfindung, und
- Figur 2B: eine Detailansicht des in Figur 2A gekennzeichneten Darstellungsabschnitts.

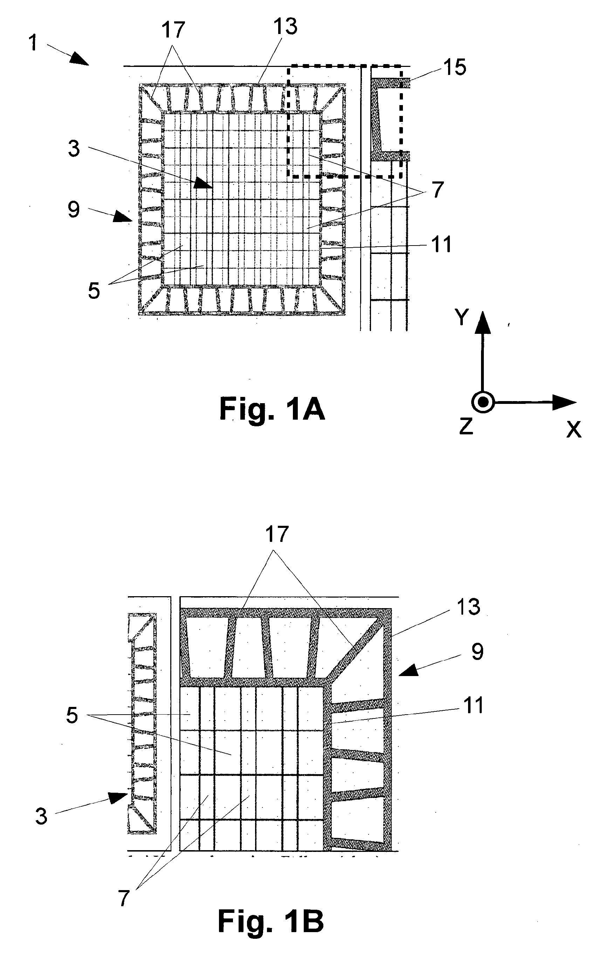

Die Figuren 1A und 1B veranschaulichen ein Mikrofluidik-Bauteil 1 in Form eines Mikrowärmeübertragers gemäß einer Ausführungsform der Erfindung. Der Mikrowärmeübertrager 1 weist eine Fluidführungsstruktur 3 mit mehreren ersten Mikrokanälen 5 zum Hindurchführen eines ersten Fluids bzw. Wärmeträgermediums (nicht dargestellt) und mehreren zweiten Mikrokanälen 7 zum Hindurchführen eines zweiten Fluids bzw. Wärmeträgermediums (nicht dargestellt) auf, wobei in den Figuren 1A und 1B beispielhaft je zwei erste Kanäle 5 und je zwei zweite Kanäle 7 gekennzeichnet sind. Die Fluidführungsstruktur 3 ist an ihrer Mantelfläche von einer Hüllstruktur in Form einer Doppelwandstruktur 9 umgeben bzw. umhüllt. Die Doppelwandstruktur bzw. Doppelwand 9 weist eine Innenwand 11 und eine im Abstand zu der Innenwand 11 angeordnete Außenwand 13 auf. Die Fluidführungsstruktur 3 und die Hüllstruktur bzw. Doppelwandstruktur 9 sind als einstückiges Bauteil integral miteinander ausgebildet.

Figur 1A zeigt einen Schnitt durch das Mikrofluidik-Bauteil 1 quer zur Längsrichtung bzw. Verlaufsrichtung der Kanäle 5 und 7; wobei die Kanäle 5, 7 entlang der z-Richtung des in Figur 1A dargestellten xyz-Koordinatensystems verlaufen. Der Mikrowärmeübertrager ist als Gegenstrom-Wärmeübertrager ausgebildet, d.h. die Strömungsrichtung des ersten Fluids ist der Strömungsrichtung des zweiten Fluids entgegengesetzt. Figur 1B ist eine Detailansicht des in Figur 1A mittels der gestrichelten Linie gekennzeichneten Darstellungsabschnitts 15.

Gemäß den Figuren 1A und 1B weist die Doppelwandstruktur 9 Verstärkungselemente in Form von Verstärkungswänden 17, die unter Ausbildung eines Fachwerks von der Innenwand 11 zu der Außenwand 13 verlaufen, auf. Die Fluidführungsstruktur 3 ist als monolithisches Bauteil integral mit der Doppelwandstruktur 9 aus einem metallischen Werkstoff (hier: Chromnickelstahl) ausgeführt, wobei die Fluidführungsstruktur 3 und die Doppelwandstruktur 9 mittels Lasersinterns aus einem Metallpulver hergestellt sind.

Das Mikrofluidik-Bauteil 1 in Form des Wärmeübertragers 1 weist zudem zwei Verteiler zum Zuführen des ersten und zweiten Fluids und zwei Sammler zum Abführen des ersten und zweiten Fluids auf (nicht dargestellt), wobei die Verteiler und Sammler an den Stirnseiten der Fluidführungsstruktur angeordnet sind und als einstückiges, monolithisches Bauteil integral mit der Fluidführungsstruktur 3 ausgebildet sind. Die Verteiler und Sammler sind ebenfalls mittels Lasersinterns aus dem Metallpulver hergestellt.

Die Wandstärke der Wände der Kanäle 5, 7 ist geringer als die Wandstärke der Innenwand 11 und die Wandstärke der Außenwand 13 der Doppelwandstruktur 9. Alle (Einzel-)Wände des Mikrofluidik-Bauteils 1 sind mit Wandstärken ausgeführt, die 500 µm nicht übersteigen. Vorliegend weisen die Kanalwände der Fluidführungskanäle 5, 7 eine Wandstärke von 60 µm auf. Die ersten Fluidführungskanäle 5 und die zweiten Fluidführungskanäle 7 sind alternierend bzw. abwechselnd in aufeinanderfolgenden Ebenen derart angeordnet, dass sie lediglich mittels der dünnen Kanalwände voneinander getrennt sind; wobei mittels der dünnen metallischen Kanalwände eine gute Wärmekopplung zwischen den ersten Kanälen 5 und den zweiten Kanälen 7 (bzw. zwischen dem ersten Fluid und dem zweiten Fluid) gegeben ist.

Als Beispiel beträgt die Wandstärke der Innenwand 11 und der Außenwand 13 jeweils 100 µm und der Abstand zwischen der Innenwand 11 und der Außenwand 13 beträgt 300 µm, sodass die Gesamtwandstärke der Doppelwandstruktur 9 vorliegend 500 µm beträgt. Die Kanäle 5 und 7 weisen als Beispiel unterschiedliche Abmessungen auf (wobei vorliegend die Kanäle 5 mit einem geringeren Querschnitt ausgebildet sind als die Kanäle 7); es kann jedoch auch vorgesehen sein, die ersten Kanäle 5 mit denselben Querschnittsabmessungen auszubilden wie die zweiten Kanäle 7. Alle der ersten Kanäle 5 und der zweiten Kanäle 7 sind als Mikrokanäle mit rechteckigem Querschnitt mit Rechteck-Seitenlängen im Bereich von 25 µm bis 300 µm ausgebildet.

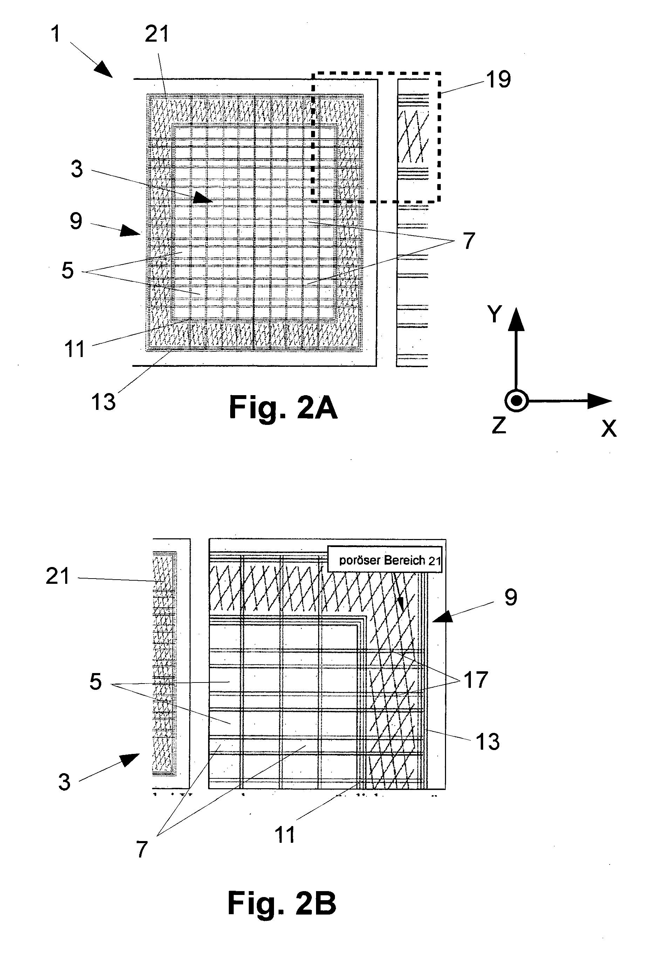

Die Figuren 2A und 2B veranschaulichen ein Mikrofluidik-Bauteil 1 in Form eines Mikrowärmeübertragers gemäß einer weiteren Ausführungsform der Erfindung. Der Mikrowärmeübertrager weist eine Fluidführungsstruktur 3 mit mehreren ersten Mikrokanälen 5 zum Hindurchführen eines ersten Fluids (nicht dargestellt) und mehreren zweiten Mikrokanälen 7 zum Hindurchführen eines zweiten Fluids (nicht dargestellt) auf, wobei die Fluidführungsstruktur 3 an ihrer Mantelfläche von einer Hüllstruktur in Form einer Doppelwandstruktur 9 mit einer Innenwand 11 und einer im Abstand zu der Innenwand 11 angeordneten Außenwand 13 umgeben bzw. umhüllt ist, und wobei die Fluidführungsstruktur 3 und die Hüllstruktur bzw. Doppelwandstruktur 9 als einstückiges Bauteil integral miteinander ausgebildet sind.

Figur 2A zeigt einen Schnitt durch das Mikrofluidik-Bauteil 1 quer zur Längsrichtung bzw. Verlaufsrichtung der Kanäle 5 und 7; wobei die Kanäle 5, 7 entlang der z-Richtung des in Figur 2A dargestellten xyz-Koordinatensystems verlaufen. Figur 2B ist eine Detailansicht des in Figur 2A mittels der gestrichelten Linie gekennzeichneten Darstellungsabschnitts 19. Der Aufbau des Mikrofluidik-Bauteils 1 gemäß den Figuren 2A und 2B entspricht bis auf den Aufbau der Doppelwandstruktur 9 im Wesentlichen dem Aufbau des Mikrofluidik-Bauteils 1 gemäß den Figuren 1A und 1B.

Die Doppelwandstruktur 9 des Mikrofluidik-Bauteils 1 gemäß den Figuren 2A und 2B weist sowohl Verstärkungselemente in Form von Verstärkungswänden 17 als auch eine zwischen der Innenwand und der Außenwand angeordnete poröse Versteifungsstruktur 21 in Form von dünnen, unter Ausbildung einer Poren- bzw. Wabenstruktur angeordneten Stützwänden auf.

Die in den Figuren 1A, 1B, 2A und 2B veranschaulichten Mikrofluidik-Bauteile 1 sind mittels selektiven Lasersinterns aus einem Metallpulver (hier: Chromnickelstahl) hergestellt, wobei die Fluidführungsstruktur 3, die Doppelwandstruktur 9 und die (nicht dargestellten) Fluidverteiler und Fluidsammler einstückig als ein monolithisches Bauteil integral miteinander ausgebildet sind.

Die Mikrofluidik-Bauteile 1 wurden derart gesintert, dass die Aufbaurichtung bzw. Schichtbaurichtung beim Lasersintern parallel zu der (gemeinsamen) Längsrichtung der ersten Kanäle 5 und der zweiten Kanäle 7 verläuft, d.h. parallel zur z-Richtung des in den Figuren veranschaulichten xyz-Koordinatensystems.

Wie z. B. aus den Figuren 1B und 2B ersichtlich, können beim Lasersintern unterschiedliche Laserstrahl-Führungen angewendet werden und dementsprechend unterschiedliche Geometrien erzeugt werden. So sind z. B. gemäß den Figuren 2A und 2B die Verstärkungswände 17 als geradlinige Verlängerung der Wände der Kanäle 5, 7 gesintert, wohingegen dies bei den Verstärkungswänden gemäß den Figuren 1A und 1B nicht der Fall ist.

### Liste der verwendeten Bezugszeichen

- 1: Mikrofluidik-Bauteil / Mikrowärmeübertrager
- 3: Fluidführungsstruktur
- 5: erste Kanäle
- 7: zweite Kanäle
- 9: Hüllstruktur / Doppelwandstruktur
- 11: Innenwand der Doppelwandstruktur
- 13: Außenwand der Doppelwandstruktur
- 15: Darstellungsabschnitt
- 17: Verstärkungselemente / Verstärkungswände
- 19: Darstellungsabschnitt
- 21: poröse Versteifungsstruktur

## Patentansprüche

1. Mikrofluidik-Bauteil (1) mit einer Fluidführungsstruktur (3) mit ersten Kanälen (5) zum Hindurchführen eines ersten Fluids und zweiten Kanälen (7) zum Hindurchführen eines zweiten Fluids, **dadurch gekennzeichnet, dass** die Fluidführungsstruktur (3) zumindest teilweise von einer Hüllstruktur in Form einer Doppelwandstruktur (9) umgeben ist, wobei die Doppelwandstruktur (9) eine Innenwand (11) und eine im Abstand zu der Innenwand angeordnete Außenwand (13) aufweist, und wobei die Fluidführungsstruktur (3) und die Doppelwandstruktur (9) als einstückiges Bauteil integral miteinander ausgebildet sind.

2. Mikrofluidik-Bauteil nach Anspruch 1, wobei die Doppelwandstruktur (9) von der Innenwand (11) zu der Außenwand (13) verlaufende Verstärkungselemente (17) aufweist.

3. Mikrofluidik-Bauteil nach Anspruch 1 oder 2, wobei die Doppelwandstruktur (9) eine zwischen der Innenwand (11) und der Außenwand (13) angeordnete poröse Versteifungsstruktur (21) aufweist.

4. Mikrofluidik-Bauteil nach einem der Ansprüche 1 bis 3, wobei die Fluidführungsstruktur (3) und die Doppelwandstruktur (9) aus einem metallischen Werkstoff bestehen.

5. Mikrofluidik-Bauteil nach einem der Ansprüche 1 bis 4, ferner aufweisend einen ersten Verteiler zum Verteilen des ersten Fluids auf die ersten Kanäle (5), einen zweiten Verteiler zum Verteilen des zweiten Fluids auf die zweiten Kanäle (7), einen ersten Sammler zum Sammeln des aus den ersten Kanälen (5) ausströmenden ersten Fluids und einen zweiten Sammler zum Sammeln des aus den zweiten Kanälen (7) ausströmenden zweiten Fluids, wobei der erste Verteiler, der zweite Verteiler, der erste Sammler und der zweite Sammler als einstückiges Bauteil integral mit der Fluidführungsstruktur (3) ausgebildet sind.

6. Mikrofluidik-Bauteil nach einem der Ansprüche 1 bis 5, wobei die ersten Kanäle (5) und die zweiten Kanäle (7) eine Wandstärke aufweisen, die geringer ist als die Wandstärke einer der Innenwand (11) und der Außenwand (13) der Doppelwandstruktur (9).

7. Mikrofluidik-Bauteil nach einem der Ansprüche 1 bis 6, wobei die Wandstärken der Wände des Mikrofluidik-Bauteils maximal 500 µm betragen.

8. Mikrofluidik-Bauteil nach einem der Ansprüche 1 bis 7, wobei die ersten Kanäle (5) und die zweiten Kanäle (7) eine Wandstärke von 25 µm bis 200 µm aufweisen.

9. Mikrofluidik-Bauteil nach einem der Ansprüche 1 bis 8, wobei die ersten Kanäle (5) und/oder die zweiten Kanäle (7) mit einem rechteckigen Querschnitt mit Seitenlängen von 25 µm bis 300 µm ausgebildet sind.

10. Mikrofluidik-Bauteil nach einem der Ansprüche 1 bis 9, wobei das Mikrofluidik-Bauteil (1) ein Mikrowärmeübertrager ist.

11. Mikrofluidik-Bauteil nach einem der Ansprüche 1 bis 9, wobei das Mikrofluidik-Bauteil (1) ein Mikromischer ist.

12. Verfahren zum Herstellen eines Mikrofluidik-Bauteils (1) gemäß Anspruch 1 aufweisend:
- Lasersintern einer Fluidführungsstruktur (3) mit ersten Kanälen (5) zum Hindurchführen eines ersten Fluids und zweiten Kanälen (7) zum Hindurchführen eines zweiten Fluids,
- Lasersintern einer die Fluidführungsstruktur (3) zumindest teilweise umgebenden Hüllstruktur in Form einer Doppelwandstruktur (9) mit einer Innenwand (11) und einer im Abstand zu der Innenwand angeordneten Außenwand (13), wobei die Fluidführungsstruktur (3) und die Doppelwandstruktur (9) als einstückiges Bauteil integral miteinander ausgebildet werden.

13. Verfahren nach Anspruch 12, ferner aufweisend:
- Lasersintern eines ersten Verteilers zum Verteilen des ersten Fluids auf die ersten Kanäle (5), eines zweiten Verteilers zum Verteilen des zweiten Fluids auf die zweiten Kanäle (7), eines ersten Sammlers zum Sammeln des aus den ersten Kanälen (5) ausströmenden ersten Fluids und eines zweiten Sammlers zum Sammeln des aus den zweiten Kanälen (7) ausströmenden zweiten Fluids, wobei der erste Verteiler, der zweite Verteiler, der erste Sammler und der zweite Sammler als einstückiges Bauteil integral mit der Fluidführungsstruktur (3) ausgebildet werden.

14. Verfahren nach Anspruch 12 oder 13, wobei die Fluidführungsstruktur (3) und die Doppelwandstruktur (9) aus einem Metallpulver gesintert werden.

15. Verfahren nach einem der Ansprüche 12 bis 14, wobei die Aufbaurichtung beim Lasersintern parallel zu der Längsrichtung (z) der ersten Kanäle (5) und/oder der zweiten Kanäle (7) ist.

## Claims

1. A microfluidic component (1) comprising a fluid conducting structure (3) having first channels (5) for conducting through a first fluid and second channels (7) for conducting through a second fluid, **characterized in that** the fluid conducting structure (3) is surrounded at least partially by a casing structure in the form of a double wall structure (9), wherein the double wall structure (9) comprises an inner wall (11) and an outer wall (13) disposed at a distance from the inner wall, and wherein the fluid conducting structure (3) and the double wall structure (9) are designed integrally with each other as a one-piece component.

2. The microfluidic component according to claim 1, wherein the double wall structure (9) comprises reinforcement elements (17) extending from the inner wall (11) to the outer wall (13).

3. The microfluidic component according to claim 1 or 2, wherein the double wall structure (9) comprises a porous reinforcement structure (21) disposed between the inner wall (11) and the outer wall (13).

4. A microfluidic component according to any one of claims 1 to 3, wherein the fluid conducting structure (3) and the double wall structure (9) are made of a metallic material.

5. A microfluidic component according to any one of claims 1 to 4, further comprising a first distributor for distributing the first fluid to the first channels (5), a second distributor for distributing the second fluid to the second channels (7), a first collector for collecting the first fluid flowing out of the first channels (5), and a second collector for collecting the second fluid flowing out of the second channels (7), wherein the first distributor, the second distributor, the first collector and the second collector are designed integrally with the fluid conducting structure (3) as a one-piece component.

6. A microfluidic component according to any one of claims 1 to 5, wherein the first channels (5) and the second channels (7) have a wall thickness that is less than the wall thickness of either the inner wall (11) or the outer wall (13) of the double wall structure (9).

7. A microfluidic component according to any one of claims 1 to 6, wherein the wall thicknesses of the walls of the microfluidic component are a maximum of 500 µm.

8. A microfluidic component according to any one of claims 1 to 7, wherein the first channels (5) and the second channels (7) have a wall thickness of 25 µm to 200 µm.

9. A microfluidic component according to any one of claims 1 to 8, wherein the first channels (5) and/or the second channels (7) are designed with a rectangular cross-section having side lengths of 25 µm to 300 µm.

10. A microfluidic component according to any one of claims 1 to 9, wherein the microfluidic component (1) is a micro heat exchanger.

11. A microfluidic component according to any one of claims 1 to 9, wherein the microfluidic component (1) is a micro mixer.

12. A method for producing a microfluidic component (1) according to claim 1, comprising:
- laser sintering a fluid conducting structure (3) comprising first channels (5) for conducting through a first fluid and second channels (7) for conducting through a second fluid; and
- laser sintering a casing structure, which at least partially surrounds the fluid conducting structure (3), in the form of a double wall structure (9) comprising an inner wall (11) and an outer wall (13) disposed at a distance from the inner wall, wherein the fluid conducting structure (3) and the double wall structure (9) are designed integrally with each other as a single-piece component.

13. The method according to claim 12, further comprising:
- laser sintering a first distributor for distributing the first fluid to the first channels (5), a second distributor for distributing the second fluid to the second channels (7), a first collector for collecting the first fluid flowing out of the first channels (5), and a second collector for collecting the second fluid flowing out of the second channels (7), wherein the first distributor, the second distributor, the first collector and the second collector are designed integrally with the fluid conducting structure (3) as a one-piece component.

14. The method according to claim 12 or 13, wherein the fluid conducting structure (3) and the double wall structure (9) are sintered from a metal powder

15. A method according to any one of claims 12 to 14, wherein the build-up direction during laser sintering is parallel to the longitudinal direction (z) of the first channels (5) and/or of the second channels (7).

## Revendications

1. Pièce de microfluidique (1) avec une structure de guidage de fluide (3) avec des premiers canaux (5) pour le passage d'un premier fluide et des deuxièmes canaux (7) pour le passage d'un deuxième fluide, **caractérisée en ce que** la structure de guidage de fluide (3) est au moins partiellement entourée par une structure d'enveloppe sous la forme d'une structure à double paroi (9), dans laquelle la structure à double paroi (9) comporte une paroi intérieure (11) et une paroi extérieure (13) agencée de façon espacée par rapport à la paroi intérieure, et dans laquelle la structure de guidage de fluide (3) et la structure à double paroi (9) sont conçues intégralement l'une avec l'autre comme une seule pièce.

2. Pièce de microfluidique selon la revendication 1, dans laquelle la structure à double paroi (9) comporte des éléments de renfort (17) s'étendant de la paroi intérieure (11) à la paroi extérieure (13).

3. Pièce de microfluidique selon la revendication 1 ou 2, dans laquelle la structure à double paroi (9) comporte une structure rigidifiante (21) poreuse agencée entre la paroi intérieure (11) et la paroi extérieure (13).

4. Pièce de microfluidique selon l'une des revendications 1 à 3, dans laquelle la structure de guidage de fluide (3) et la structure à double paroi (9) sont constituées d'un matériau métallique.

5. Pièce de microfluidique selon l'une des revendications 1 à 4, comportant en outre un premier répartiteur pour la répartition du premier fluide entre les premiers canaux (5), un deuxième répartiteur pour la répartition du deuxième fluide entre les deuxièmes canaux (7), un premier collecteur pour la collecte du premier fluide sortant des premiers canaux (5), et un deuxième collecteur pour la collecte du deuxième fluide sortant des deuxièmes canaux (7), dans laquelle le premier répartiteur, le deuxième répartiteur, le premier collecteur et le deuxième collecteur sont conçus d'une seule pièce intégralement avec la structure de guidage de fluide (3).

6. Pièce de microfluidique selon l'une des revendications 1 à 5, dans laquelle les premiers canaux (5) et les deuxièmes canaux (7) présentent une épaisseur de paroi inférieure à l'épaisseur de paroi de l'une parmi la paroi intérieure (11) et la paroi extérieure (13) de la structure à double paroi (9).

7. Pièce de microfluidique selon l'une des revendications 1 à 6, dans laquelle les épaisseurs de paroi des parois de la pièce de microfluidique mesurent au maximum 500 µm.

8. Pièce de microfluidique selon l'une des revendications 1 à 7, dans laquelle les premiers canaux (5) et les deuxièmes canaux (7) présentent une épaisseur de paroi de 25 µm à 300 µm.

9. Pièce de microfluidique selon l'une des revendications 1 à 8, dans laquelle les premiers canaux (5) et/ou les deuxièmes canaux (7) sont conçus avec une section transversale rectangulaire avec des longueurs de côté de 25 µm à 300 µm.

10. Pièce de microfluidique selon l'une des revendications 1 à 9, dans laquelle la pièce de microfluidique (1) est un micro-échangeur de chaleur.

11. Pièce de microfluidique selon l'une des revendications 1 à 9, dans laquelle la pièce de microfluidique (1) est un micromélangeur.

12. Procédé pour la fabrication d'une pièce de microfluidique (1) selon la revendication 1, comprenant :
- le frittage laser d'une structure de guidage de fluide (3) avec des premiers canaux (5) pour le passage d'un premier fluide et des deuxièmes canaux (7) pour le passage d'un deuxième fluide,
- le frittage laser d'une structure d'enveloppe entourant au moins partiellement la structure de guidage de fluide (3), sous la forme d'une structure à double paroi (9) avec une paroi intérieure (11) et une paroi extérieure (13) agencée de façon espacée par rapport à la paroi intérieure, la structure de guidage de fluide (3) et la structure à double paroi (9) étant conçues comme une seule pièce, intégralement l'une avec l'autre.

13. Procédé selon la revendication 12, comprenant en outre :
- le frittage laser d'un premier répartiteur pour la répartition du premier fluide entre les premiers canaux (5), d'un deuxième répartiteur pour la répartition du deuxième fluide entre les deuxièmes canaux (7), d'un premier collecteur pour la collecte du premier fluide sortant des premiers canaux (5), et d'un deuxième collecteur pour la collecte du deuxième fluide sortant des deuxièmes canaux (7), dans lequel le premier répartiteur, le deuxième répartiteur, le premier collecteur et le deuxième collecteur sont conçus d'une seule pièce, intégralement avec la structure de guidage de fluide (3).

14. Procédé selon la revendication 12 ou 13, dans lequel la structure de guidage de fluide (3) et la structure à double paroi (9) sont frittées à partir d'une poudre métallique.

15. Procédé selon l'une des revendications 12 à 14, dans lequel la direction de construction lors du frittage laser est parallèle à la direction longitudinale (z) des premiers canaux (5) et/ou des deuxièmes canaux (7).
